# EUROPEAN PATENT APPLICATION

(11) **EP 1 761 000 A2**
(43) Date of publication of application: **07.03.2007**
(21) Application number: 06120119.0
(22) Date of filing: 05.09.2006
(51) Int. Cl.: H04M 1/02

(54) **Rotatable portable terminal with protection case**

(30) Priority: 06.09.2005 KR 20050082664
(71) Applicant: Samsung Electronics Co., Ltd., Yeongtong-gu Suwon-si, Gyeonggi-do (KR)
(72) Inventor: Choi, Kwang-Ha, Suwon-si, Gyeonggi-do (KR); Hyun, Sang-Min, Suwon-si, Gyeonggi-do (KR); Lee, Chang-Soo, Suwon-si, Gyeonggi-do (KR)
(74) Representative: Zimmer, Franz-Josef

(57) **Abstract**

The portable terminal includes a body assembly (10), and a case (200) having at least one opening (201,202). The case (200) is connected to the body assembly (10) to rotate around a first hinge axis (A1) perpendicular to an upper surface of the body assembly (10), enclosing a predetermined portion of the body assembly (10) to protect or open the body assembly (10), and operating as a grip regardless of rotation of the body assembly (10).

## Description

### BACKGROUND OF THE INVENTION

### 1. Field of the Invention

The present invention relates to a portable terminal including Digital Multimedia Broadcasting (DMB) phones, game phones, chatting phones, camera phones, Music Player 3 (MP3) phones, cellular phones, Personal Communication System (PCS), Personal Digital Assistants (PDAs), Hand Held phones (HHPs) and the like, and more particularly to a portable terminal having a multifunctional case.

### 2. Description of the Related Art

In general, a "portable terminal" is an electronic device which a user can carry while communicating with another user wirelessly. In consideration of portability, design of such a portable terminal has tended not only toward compactness, slimness and lightness, but also toward providing multimedia capabilities to enable the user to pursue a wider variety of functions. In particular, future portable terminals will not only be used for many functions while still being compact and light, but also be modified to be suitable for functioning in a multimedia environment and for providing internet access and functions. Additionally, such portable terminals young and old, anywhere in the world, and are recognized as a necessity which the user always carries.

Conventional portable terminals are classified into various types according to their appearance, such as bar-type portable terminals, flip-type portable terminals, and folder-type portable terminals. The bar-type portable terminal has a single housing shaped like a bar. The flip-type portable terminal has a flip panel which is pivotally mounted to a bar-shaped housing by a hinge unit. The folder-type portable terminal has a folder coupled to a single bar-shaped housing by a hinge unit in such a manner that the folder can be rotated in order to be folded or unfolded from the housing.

Also, portable terminals are classified as neckwear-type terminals and wristwear-type terminals, according to the position at or the way in which the user wears the terminal. The neckwear-type terminal is one which the user wears around the neck using a lanyard or necklace, while the wristwear-type terminal is one which the user wears around the wrist.

Additionally, portable terminals are classified as rotation-type terminals and sliding-type terminals according to ways of opening and closing the terminals. In the rotation-type portable terminal, two housings are coupled to each other in a manner that one housing rotates to be opened or closed relative to the other while facing each other. In the sliding-type portable terminal, two housings are coupled to each other in a manner that one housing slides to be opened or closed relative to the other.

Further, the conventional portable communication terminals has been improved to enable voice communication as well as high-speed data communication. That is, as consumer demands have increased, various services have been provided using wireless communication technology for transmitting and receiving data at high speeds.

Current portable terminals may have a camera lens mounted on the portable communication terminal, and it is possible to transmit image signals and the like. Meanwhile, present portable communication terminals are provided with an embedded or external camera lens module. Therefore, it is possible to perform image communication with a desired partner or to photograph a desired object.

However, the conventional portable terminal does not have a separate protection means, so that it sometimes becomes damaged by external circumstances. Specially, a device such as a display unit or an information input and output unit is frequently damaged by the external circumstance, so that the user cannot identify displayed data. The damage such as a scratch is caused by dropping of the portable terminal on a surface of the casing or the display unit. Also, the surface of the display unit is contaminated by a foreign substance such as dust and the keys of a keypad are contaminated by foreign substances interposed between the keys.

Further, since the conventional portable terminal does not have a separate grip, it is conventional that the user takes a picture while holding a body of a camera by the hand in a camera mode. Thus, it is difficult for the user to maintain a stable grip of the portable terminal. Especially, unstable holding of the portable terminal increases the danger to drop the portable terminal. Therefore, the dropping of the portable terminal due to the user's carelessness frequently causes damage to the casing or the display unit. When the damage to the portable terminal due to dropping is serious, the portable terminal malfunctions. This is non-economical for the user.

### SUMMARY OF THE INVENTION

Accordingly, the present invention has been made to solve the above-mentioned problems occurring in the prior art, and an object of the present invention is to provide a portable terminal which includes a case for protecting a body assembly of the portable terminal and functioning as a grip, regardless of the rotation of the body assembly.

Another object of the present invention is to provide a portable terminal which includes a rotating case capable of protecting an information input and output unit from external circumstances.

A further object of the present invention is to provide a portable terminal in which a display unit is arranged in a landscape status in a camera mode and rotates to be inclined to provide multidirectional angles, and a case functions as a convenient grip.

Still another object of the present invention is to provide a portable terminal which includes a case made of a leather material to enable the excellent sense of touch and to give high quality feeling, and through which an impact can be minimized.

Yet another object of the present invention is to provide a portable terminal in which a switch and a camera unit are coaxial around a single hinge axis, so as to maximize the use of a mounting space for the switch and camera.

Still another object of the present invention is to provide a portable terminal which includes a pair of speakers, thereby supplying stereo sound outputted from the speakers.

Another object of the present invention is to provide a portable terminal which employs an information input and output unit so as to minimize a mounting space for key arrangement, thereby having advantages of slimness and miniaturization thereof.

In order to accomplish these objects, there is provided a portable terminal which includes a body assembly, and a case having at least one opening. The case is connected to the body assembly to rotate around a first hinge axis being perpendicular to an upper surface of the body assembly for enclosing a predetermined portion of the body assembly to protect or open the body assembly, and operating as a grip regardless of rotation of the body assembly.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view illustrating a portable terminal in a standby mode, according to the present invention;
FIG. 2 is a perspective view illustrating the portable terminal in a phone mode, according to the present invention;
FIG. 3 is a perspective view illustrating the portable terminal according to the present invention, in which the body assembly of the portable terminal rotates by angles of ninety degrees;
FIG. 4 is a perspective view illustrating the portable terminal according to the present invention of FIG. 3 in view of a bottom direction; and
FIG. 5 is a perspective views illustrating the portable terminal according to the present invention, in which an information input and output unit rotates and help a user watch a screen in a camera mode.

### DETAILED DESCRIPTION OF THE PREFERRED EMBODIMENT

Hereinafter, the preferred embodiment of the present invention will be described with reference to the accompanying drawings. In the following description of the present invention, a detailed description of known functions and configurations incorporated herein is omitted to avoid making the subject matter of the present invention unclear.

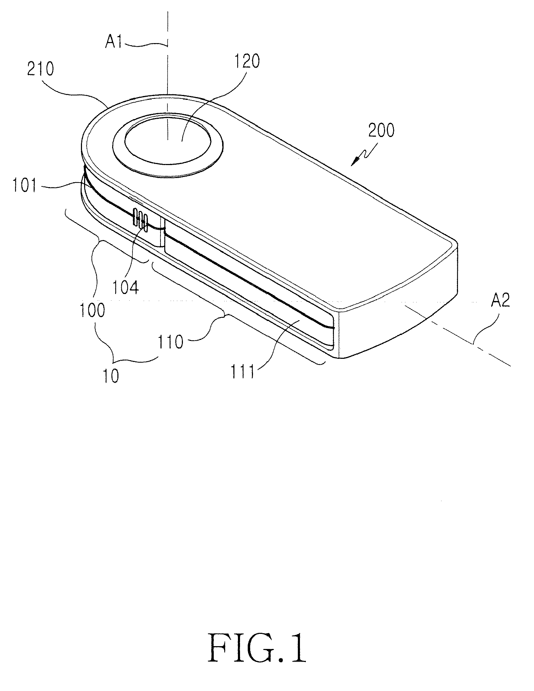

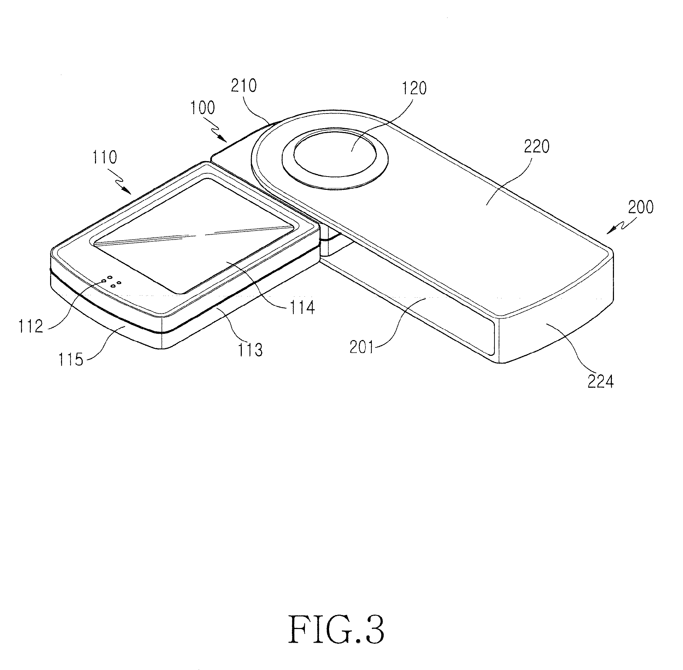

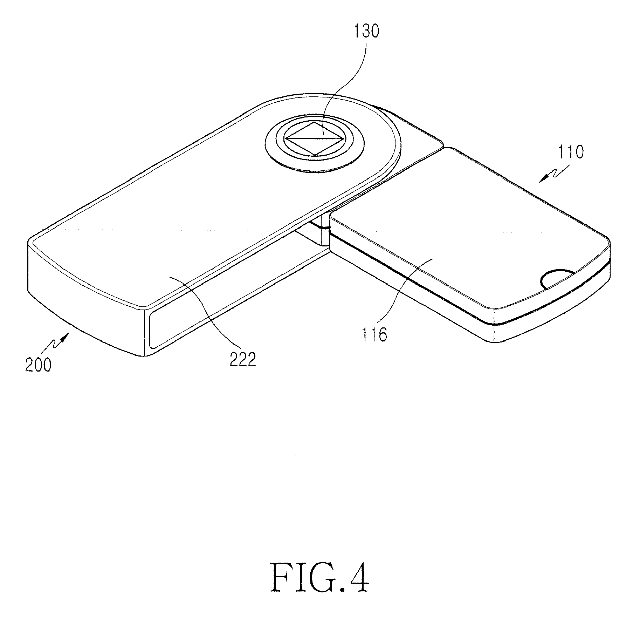

As illustrated in FIGs. 1 and 3, the portable terminal according to the present invention includes a body assembly 10, and a case 200 functioning as a grip regardless of the rotation of the body assembly 10 and enclosing the body assembly 10 so as to protect or open the body assembly 10. The case 200 is provided to enclose and protect the body assembly 10, especially to close or open the body assembly 10 to enclose or expose an upper surface, a lower surface, and a front surface 115 of the body assembly 10. The upper surface of the body assembly 10 is a surface on which an information input and output unit 114 is mounted, while the lower surface is a surface on which a battery pack 116 illustrated in FIG. 4 is mounted. Further, the case 200 functions as the grip when the body assembly 10 rotates by a predetermined angle.

The case 200 has at least one opening 201 or 202, so that the body assembly 10 is completely received or separated from an inner space of the case 200. Further, the case 200 has an upper surface 220, a lower surface 222, and a front surface 224, in which the openings 201 and 202 are defined by the upper surface 220, the lower surface 222, and the front surface 224 of the case 200. Specifically, the case 200 is connected to the body assembly 10 so as to rotate around a first hinge axis A1 perpendicular to the upper and lower surfaces of the body assembly 10, thereby closing or opening a part of the body assembly 10. When the body assembly 10 rotates by a desired angle, the case 200 operates as a grip for a user. More particularly, the case 200 operates as a grip in a state that the body assembly 10 rotates by an angle of 90 and 180 degrees. Further, the openings 201 and 202 of the case 200 are formed in both sides of the case 200 to receive the body assembly 10, so that both sides 111 and 113 of the body assembly are exposed. FIG. 1 illustrates the body assembly 10 completely received in the case 200, in which both sides 111 and 113 of the body assembly 10 are exposed. The case 200 has semicircular free ends 210 which are coupled to the body assembly 10, preferably to the upper and lower surfaces of a first body 100, to face each other.

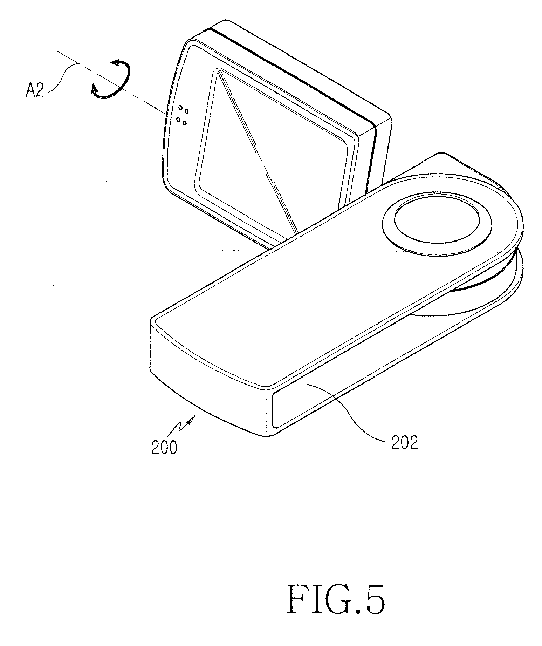

The body assembly 10 includes the first body 100 connected to the case 200 to be coaxial with the first hinge axis A1, and a second body 110 connected to the first body 100 to rotate around a second hinge axis A2 perpendicular to the first hinge axis A1. The second body 110 can rotate around the second hinge axis A2 when the first body 100 rotates by an angle more than 90 degrees around the first hinge axis A1 with relation to the case 200. In FIGs. 4 and 5, the second body 110 rotates around the second hinge axis A2 after the first body 100 rotates around the first hinge axis A1 by an angle of about 90 degrees with respect to the case 200. Further, the first and second hinge axes A1 and A2 are orthogonal to each other.

The first body 100 has an upper surface, a lower surface, and side surfaces. The upper surface of the first body 100 is a surface on which a switch 120 is mounted, while the lower surface is a surface on which a camera unit 130 is mounted. The first body 100 includes the switch 120 arranged on the upper surface of the first body 100 to be coaxial with the first hinge axis A1, the camera unit 130 arranged on the lower surface of the first body 100 to be coaxial with the first hinge axis A 1 and vertically aligned with the switch 120, and at least one first speaker unit 102 and 104 arranged on the side surface 101 of the first body 100. The switch unit 120 is provided with a rotation key, preferably a jog dial switch and has a disc shape. The camera unit 130 has a cylindrical shape. A swing module (not shown) has also a cylindrical shape. Further, the first body 100, the switch 120 and the camera unit 130 are vertically aligned with one another about the first hinge axis A1. Thus, the portable terminal according to the present invention has a merit of using a mounting space to a maximum extent and accomplishes slimness and miniaturization of the body assembly 10.

The switch 120 and the camera unit 130 are always exposed through the upper and lower surfaces of the case 200, respectively, regardless of the rotation of the case 200. The first speaker units 102 and 104 are always exposed out of the openings 201 and 202, regardless of the rotation of the case 200. The pair of first speaker units 102 and 104 is disposed on side surfaces so as to provide stereo sound.

As illustrated in FIGs. 4 and 5, the second body 110 has an upper surface, a lower surface, and a front surface. The second body 110 includes a second speaker unit 112 disposed on the upper surface thereof, the information input and output unit 114 disposed on the upper surface thereof to be adjacent to the second speaker unit 112, and the battery pack 116 disposed on the lower surface thereof. The information input and output unit 114 preferably includes a touch screen.

The case 200 is preferably made of a leather material, which provides the user with an excellent sense of touch when the user grasps the case 200 and minimizes impact when the portable terminal is dropped. Especially, the case 200 protects the information input and output unit 114. The case 200 can be also made of synthetic resin and covered with a leather skin.

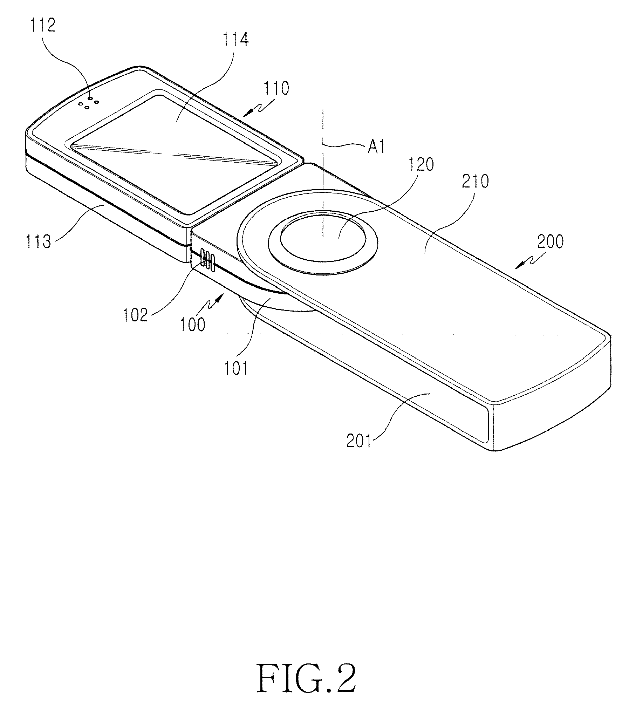

FIG. 1 illustrates the portable terminal according to the present invention in a standby mode, FIG. 2 illustrates the portable terminal in a phone mode, and FIGs. 3 to 5 show the portable terminal in a camera mode. Especially, as illustrated in FIG. 5, when the information input and output unit 114 rotates around the second hinge axis A2 so as to be inclined, the user can identify the displayed data. Further, as illustrated in FIG. 3, when the information input and output unit 114 is arranged in a landscape state, the user can take moving pictures of an object in a moving picture mode, and watch a broadcasting program and video program in a DMB mode and a video watching mode, respectively. Further, FIGs. 2 to 5 illustrate the case 200 used as the grip.

In addition, resting angles of the body assembly 10 are set into 0, 90 and 180 degrees by a swing module (not shown). On the other hand, in a case where a driving unit (not shown) rotating the body assembly 10 operates semi-automatically in the case 200, when the body assembly 10 departs from the case 200 and rotates, force to close the body assembly 10 is applied to the body assembly 10 in a direction of 0 degree in a range of angle of 0 to 30 degrees. Further, the body assembly 10 is opened the body assembly 10 at an angle larger than 30 degrees, while being rested at an angle of 90 degrees. Furthermore, the body assembly 10 is rotated in a direction of 90 degrees in a range of 90 to 120 degrees, while being opened the body assembly 10 at an angle larger than 120 degrees. However, the body assembly 10 is rested at an angle of about 180 degrees. The force is applied to the body assembly 10 only when the swing module (not shown) operates semi-automatically. The swing hinge module is mounted between the switch 120 and the camera unit 130. In addition, in the case of operating semi-automatically, the driving unit includes elastic elements, for example, torsion springs, tension springs, leaf springs, or coil springs, while including a motor, a reduction gear connected to a rotation shaft of the motor, and a motor controller. The reduction gear for the motor includes a gearbox in which a plurality of gears is arranged.

As described above, the case according to the present invention protects the body assembly and is used as a grip. The case being made of leather material provides the user with the excellent sense of touch and minimizes impact in the event of the portable terminal dropping. Especially, the present invention protects surfaces of the exterior casing frame or the information input and output unit and provides a stable grip. Furthermore, the present invention provides an excellent grip and various angles in the camera mode, while maximizing the space efficiency of mounting the important structural elements, thereby achieving the slimness or the miniaturization of the portable terminal. In addition, the present invention reduces the number of the conventional keys mounted on the portable terminal to accomplish the slimness or the miniaturization of the portable terminal, while it also provides stereo sound in a DMB mode or a game mode.

While the invention has been illustrated and described with reference to certain preferred embodiments thereof, it will be understood by those skilled in the art that various changes in form and details may be made therein without departing from the scope of the invention as defined by the appended claims.

## Claims

1. A portable terminal comprising:
a body assembly (10); and
a case (200) having at least one opening (201,202), the case being rotatably connected to the body assembly around a first hinge axis, A1, perpendicular to an upper surface of the body assembly for enclosing a predetermined portion of the body assembly to protect or open the body assembly, and adapted to be operated as a grip regardless of rotation of the body assembly.

2. The portable terminal as claimed in claim 1, wherein the case (200) closes and opens an upper surface, a lower surface and a front surface of the body assembly (10) according to the rotation of the body assembly, while both side surfaces of the body assembly are always exposed.

3. The portable terminal as claimed in claim 1, wherein the body assembly (10) includes:
a first body (100) connected to the case (200) so as to be coaxial with the first hinge axis, A1; and
a second body (110) connected to the first body (100) so as to rotate around a second hinge axis, A2, perpendicular to the first hinge axis, A1, wherein the second body rotates around the second hinge axis after the first body rotates around the first hinge axis by at least an angle of 90 degrees out of the case.

4. The portable terminal as claimed in claim 3, wherein the first body (100) includes:
a switch (120) arranged on an upper surface of the first body (100) so as to be coaxial with the first hinge axis, A1;
a camera unit (130) arranged on a lower surface of the first body (100) so as to be coaxial with the first hinge axis, A1, and vertically aligned with the switch (120); and
at least one first speaker unit (102,104) arranged on side surfaces of the first body (100), the switch (120) and the camera unit (130) always being exposed to the upper and the lower surfaces of the case, respectively, regardless of a rotation of the case, and the first speaker units always being exposed through the openings of the case, regardless of the rotation of the case.

5. The portable terminal as claimed in claim 4, wherein the switch (120) is a jog dial-type switch.

6. The portable terminal as claimed in claim 3, wherein the second body (110) includes:
a second speaker unit (112) disposed on an upper surface of the second body;
an information input and output unit (114) arranged to be adjacent to the second speaker unit (112) on the upper surface of the second body; and
a battery pack (116) arranged on a lower surface of the second body (110).

7. The portable terminal as claimed in claim 1, wherein the case (200) is made of a leather material.

8. The portable terminal as claimed in claim 3, wherein the first and second hinge axes, A1, A2, are orthogonal to each other.

9. The portable terminal as claimed in claim 1, wherein the case (200) closes and opens an upper surface, a lower surface, and a front surface of the body assembly (10), and has semi-circular shaped free ends (210) which face each other.
